# EUROPÄISCHE PATENTSCHRIFT

(11) **EP 2 281 116 B1**
(45) Veröffentlichungstag und Bekanntmachung des Hinweises auf die Patenterteilung: **07.11.2012**
(21) Anmeldenummer: 09732893.4
(22) Anmeldetag: 09.04.2009
(51) Int. Cl.: F03D 1/00, F03D 11/00, F03D 11/04, E04H 12/08, H02G 5/00

(54) **WINDENERGIEANLAGE MIT STROMSCHIENEN**
WIND ENERGY SYSTEM COMPRISING BUSBARS
ÉOLIENNE AVEC BARRES CONDUCTRICES

(30) Priorität: 15.04.2008 DE 102008018790
(43) Veröffentlichungstag der Anmeldung: 09.02.2011
(73) Patentinhaber: Wobben, Aloys, 26607 Aurich (DE)
(72) Erfinder: KNOOP, Frank, 26607 Aurich (DE)
(74) Vertreter: Eisenführ, Speiser & Partner
(86) Internationale Anmeldenummer: PCT/EP2009/054296
(87) Internationale Veröffentlichungsnummer: WO 2009/127592

(56) Entgegenhaltungen:
- WO-A1-03/036084
- DE-A1- 3 321 441
- DE-A1- 19 609 006

## Beschreibung

Die Erfindung betrifft eine Windenergieanlage mit einem aus mehreren Turmsegmenten aufgebauten Turm, mit einem im Bereich des Turmkopfes angeordneten Generator, mit einem im Bereich des Turmfußes oder entfernt vom Turm angeordneten Leistungsmodul, mit segmentiert in den zugehörigen Turmsegmenten vormontierten Stromschienenelementen zur Stromübertragung vom Generator zum Leistungsmodul und mit Verbindungselementen zur Verbindung von in benachbarten Turmsegmenten vormonierten Stromschienenelementen. Die Erfindung betrifft ferner ein entsprechendes Turmsegment für eine solche Windenergieanlage. Das elektrische Leistungsmodul einer Windenergieanlage, das elektrische Einheiten wie Transformator, Schaltschränke, ggf. Wechselrichter, Mittelspannungsanlage, Niederspannungsverteilung usw. umfasst, ist bei bekannten Windenergieanlagen unterhalb der Generatorebene und häufig im Bereich des Turmfußes des Turmes der Windenergieanlage oder entfernt vom Turm angeordnet, z.B. auf dem Festland bei einer Off-Shore-Windenergieanlage. Dafür bzw. für einige dieser Komponenten ist meist ein eigenes kleines Gebäude außerhalb der Windenergieanlage vorgesehen, teilweise können diese Komponenten aber auch innerhalb des Turmes auf dem Fundament aufgestellt sein.

Um die von dem im Bereich der Turmspitze innerhalb einer Gondel angeordneten Generator erzeugte elektrische Energie zum Leistungsmodul zu übertragen, sind Stromleitungsmittel vorgesehen, die zumeist innerhalb des Turmes verlaufen und in Form von Kabeln ausgestaltet sind. Diese Kabel werden üblicherweise in den Turm eingebracht, nachdem dieser aufgestellt ist. Dies ist ein aufwändiges Verfahren, da die Kabel über die gesamte Turmhöhe in einem separaten Arbeitsgang installiert werden müssen. Weiterhin ist dieser Arbeitsgang von der vorherigen Errichtung des Turmes abhängig.

In WO 03/036084 wird eine Windenergieanlage beschrieben, bei der die Stromleitungsmittel, die bevorzugt Kabel- oder Stromschienen sind, segmentiert in den Turmsegmenten vormontiert sind. Bei einer Ausgestaltung dieser Windenergieanlage werden die Stromleitungsmittel nur an einem Punkt, vorzugsweise im in aufgebautem Zustand oberen Bereich, mit den zugehörigen Turmsegmenten fest verbunden, so, dass diese zwar fest hängen, aber noch in gewissen Grenzen beweglich an der Innenwand des Turmsegmentes angebracht sind.

Der vorliegenden Erfindung liegt die Aufgabe zugrunde, eine Windenergieanlage anzugeben, die sich einfacher und damit auch günstiger und schneller errichten lässt.

Diese Aufgabe wird erfindungsgemäß dadurch gelöst, dass an der Innenwand in dem im aufgebauten Zustand unteren Endbereich der Turmsegmente Klemmhalter angebracht sind und dass die Stromschienenelemente dadurch in den jeweils zugehörigen Turmsegmenten vormontiert sind und dass Endabschnitte der Stromschienenelemente in die Klemmhalter eingeklemmt oder eingesteckt sind.

Die Segmente der Stromschienenelemente sind somit vorgefertigt und an den jeweiligen Turmsegmenten so angebracht, dass deren Endabschnitte in dem im aufgebauten Zustand unteren Bereich des Turmsegmentes so in den dort angebrachten Klemmhalter eingeklemmt oder eingesteckt sind, dass sie bereits in eine Position ausgerichtet sind, um mit dem benachbarten Turmsegment verbunden zu werden. Es ist somit weder erforderlich, nach Errichtung des Turmes aufwändig Kabel durch den Turm zu ziehen, um Generator und Leistungsmodul elektrisch miteinander zu verbinden, noch müssen Kabel, die bereits an einem Punkt vormontiert sind, bei Aufbau des Turmes ausgerichtet und weiter befestigt werden. Die erfindungsgemäß vorgesehenen Klemmhalter ermöglichen zudem eine einfache und schnelle Vormontage der Stromschienenelemente in den zugehörigen Turmsegmenten und bieten zudem auch ausreichend Transportsicherheit beim Transport der Turmsegmente.

Weiters sind die Verbindungselemente so vorgespannt, dass ein freies Ende an einem Endabschnitt der Stromschienenelemente anliegt oder dagegen presst. Eine solche Ausgestaltung ermöglicht ebenfalls eine Verbindung eines Verbindungselementes mit einem Stromschienenelement ohne zusätzliche Befestigungsmittel. Insbesondere kann bei dieser Ausgestaltung eine erhöhte Stabilität erreicht werden, da insbesondere das Anpressen der Verbindungselemente an die Endabschnitte der zugehörigen Stromschienenelemente, welches bevorzugt in Richtung der Turmin nenwand erfolgt, ein Umfallen der Stromschienenelemente in den Turminnenraum hinein verhindert.

Durch die erfindungsgemäßen Maßnahmen lassen sich jedenfalls im Vergleich zu einigen bisher bekannten Windenergieanlagen die gesamte Errichtungszeit der Windenergieanlage verkürzen und die Kosten für die Errichtung verringern, ohne dass nennenswerte technischen Nachteile in Kauf genommen werden müssten.

Vorteilhafte Ausgestaltungen der erfindungsgemäßen Windenergieanlage sind in den abhängigen Ansprüchen angegeben.

Die Verbindungselemente sind entweder jeweils Teil eines Stromschienenelementes und können somit auch mit vormontiert werden oder sie sind zu den Stromschienenelementen separate Teile..

Verbindungselemente werden gemäß der vorliegenden Erfindung dazu verwendet, nach Errichtung des Turmes die Stromschienenelemente zu verbinden, sofern diese nicht unmittelbar aneinander reichen und/oder Teile eines Stromschienenelementes sind oder falls Lücken oder sonstige Hindernisse zwischen den Stromschienenelementen, beispielsweise ein Flansch zum Verbinden zweier Turmsegmente, überbrückt werden müssen.

In einer bevorzugten Ausgestaltung sind die Verbindungselemente jeweils am im aufgebauten Zustand unteren Endabschnitt der Stromschienenelemente eines zugehörigen Turmsegmentes angeordnet. Durch einen solchen Aufbau wird es ermöglicht, einen möglichst kurzen Abschnitt als Verbindungselement und/oder einen kurzen Abschnitt der Stromschienenelemente zu benutzen und damit Material einzusparen. Außerdem sind in diesem Fall keine separaten Verbindungselemente mehr erforderlich, die nach dem Aufbau des Turmes noch gesondert montiert werden müssten.

Alternativ oder zusätzlich können die Verbindungselemente auch jeweils am im aufgebauten Zustand oberen Endabschnitt der Stromschienenelemente eines zugehörigen Turmsegmentes angeordnet sein.

In einer weiteren bevorzugten Ausgestaltung ist mindestens ein Endabschnitt der Verbindungselemente jeweils mit einem Endabschnitt, insbesondere dem oberen Endabschnitt, der Stromschienenelemente zusammensteckbar oder -klemmbar. Eine solche Ausgestaltung ist insofern vorteilhaft, als dass hierdurch eine (mechanische oder elektrische) Verbindung eines Verbindungselementes mit einem oder zwei Stromschienenelementen erhalten wird, ohne dass zusätzliche Befestigungsmittel zu verwenden sind.

In einer weiteren bevorzugten Ausgestaltung sind die Verbindungselemente von der Turminnenwand ins Turminnere zur Überbrückung wenigstens eines Flansches zweier benachbarter Turmsegmente gebogen oder gewinkelt. Eine solche Ausgestaltung ermöglicht die Überbrückung von Hindernissen zwischen zwei Stromschienenelementen, beispielsweise zweier Flansche zum Verbinden der beiden Turmsegmente.

In einer weiteren bevorzugten Ausgestaltung sind die Stromschienenelemente im aufgebauten Zustand im oberen Endbereich des zugehörigen Turmsegmentes zusätzlich mittels Halteelementen gegen Umfallen gesichert. Eine solche Ausgestaltung ermöglicht es, dass bei starken Turmschwankungen die Stromschienenelemente zueinander in gleicher relativer Position bleiben.

Ein weiterer Aspekt der vorliegenden Erfindung besteht in einem Turmsegment für eine erfindungsgemäße Windenergieanlage, das dadurch gekennzeichnet ist, dass an der Innenwand in dem im aufgebauten Zustand unteren Endbereich des Turmsegmentes Klemmhalter angebracht sind und dass die Stromschienenelemente dadurch in dem Turmsegment so vormontiert sind, dass die Endabschnitte der Stromschienenelemente in die Klemmhalter eingeklemmt oder eingesteckt sind.

Um einerseits das Wartungspersonal beim Besteigen des Turmes durch dessen Innenraum vor Kontakt mit den Stromschienen zu schützen und eine elektrische Isolierung zu gewährleisten und andererseits die Stromschienen vor Beschädigungen zu schützen, ist in einer weiteren Ausgestaltung eine Schutzhülle, insbesondere ein Schutzblech, vorgesehen, das beispielsweise fest mit der Innenwand des Turmes verbunden ist und die Stromschienen vollständig vor Berührungen schützt. Auch diese Schutzhülle kann in einzelne Segmente aufgeteilt sein, die bevorzugt ebenso wie die Stromschienenelemente an den Turmsegmenten vormontiert sind. Dadurch wird eine weitere zeitliche Verkürzung und Vereinfachung der Errichtung der Windenergieanlage erreicht.

Die Erfindung wird nachfolgend anhand der Zeichnungen näher erläutert. Es zeigen:
- Fig. 1: eine Darstellung einer erfindungsgemäßen Windenergieanlage,

- Fig. 2: eine perspektivische Darstellung von Stromschienenelementen und zwei Turmsegmenten,
- Fig. 3: eine perspektivische Darstellung von Stromschienenelementen und Klemmhaltem,
- Fig. 4: eine perspektivische Darstellung von Stromschienenelementen und Halteelementen und
- Fig. 5: eine schematische Ansicht von Stromschienenelementen und Schutzblech.

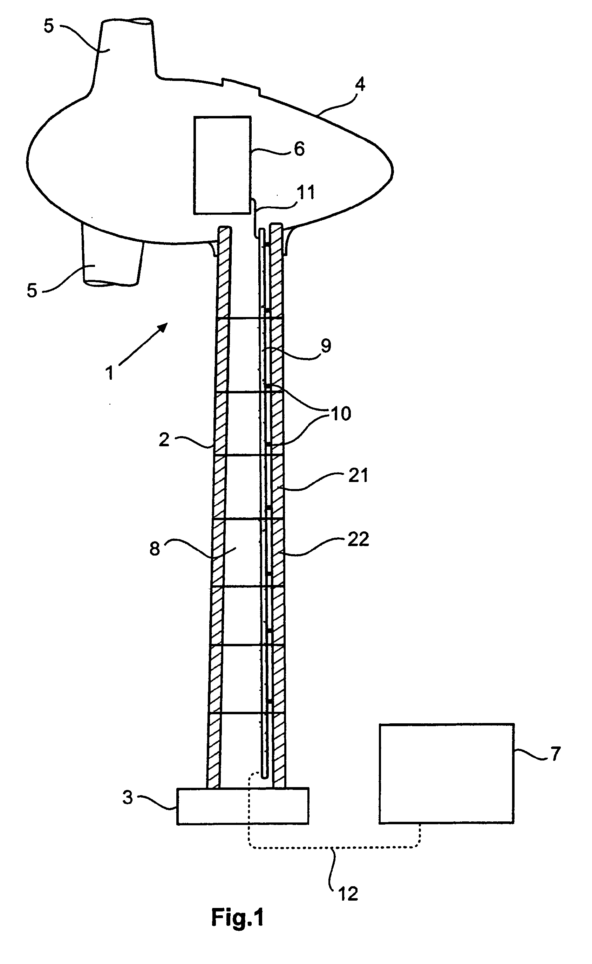

Die in Fig. 1 schematisch dargestellte, erfindungsgemäße Windenergieanlage 1 weist einen Turm 2 mit einem Fundament 3, eine im Bereich der Turmspitze bzw. des Turmkopfes drehbar gelagerte Gondel 4 sowie ein im Bereich des Turmfußes, beispielsweise in einem separaten Häuschen, angeordnetes Leistungsmodul 7 auf. Innerhalb der Gondel 4 ist ein um eine horizontale Achse drehbar gelagerter Rotor mit mehreren nur im Ansatz gezeigten Rotorblättern 5 sowie ein elektrischer Generator 6 angeordnet. Durch die auf die Rotorblätter 5 wirkenden Windkräfte wird der Rotor in Drehung versetzt und treibt den Generator 6 zur Erzeugung elektrischer Energie an.

Zur Übertragung der von dem Generator 6 erzeugten Energie an das Leistungsmodul 7, das zahlreiche elektrische Einheiten aufweist, wie einen Transformator oder ggf. einen Wechselrichter zur Weiterbearbeitung des elektrischen Stromes, bevor dieser in das Netz eingespeist bzw. an einen Verbraucher weitergeleitet wird, sind erfindungsgemäß Stromschienen 9, vorzugsweise zwei, drei oder vier Stromschienen 9 vorgesehen. Diese Stromschienen 9 sind elektrisch leitend und über ein Kabel 11 mit dem Generator sowie über eine Verbindungsleitung 12, die vorzugsweise durch das Fundament 3 und den Untergrund führt, mit dem Leistungsmodul 7 elektrisch verbunden.

Der Turm 2 ist schematisch in einer Schnittdarstellung gezeigt, und es sind exemplarisch zwei Turmsegmente 21 und 22 gekennzeichnet. Jeweils im unteren Bereich eines Turmsegmentes, also auch im jeweils unteren Bereich der Turmsegmente 21 und 22 ist ein Klemmhalter 10 angeordnet zum Halten von Stromschienenelementen der Stromschiene 9. Die Fig. 1 soll lediglich eine Übersicht über die Position der Stromschiene 9 geben und die Unterteilung der Stromschiene 9 in einzelne Stromschienenelemente ist in der Fig. 1 aus diesem Grunde nicht näher gezeigt.

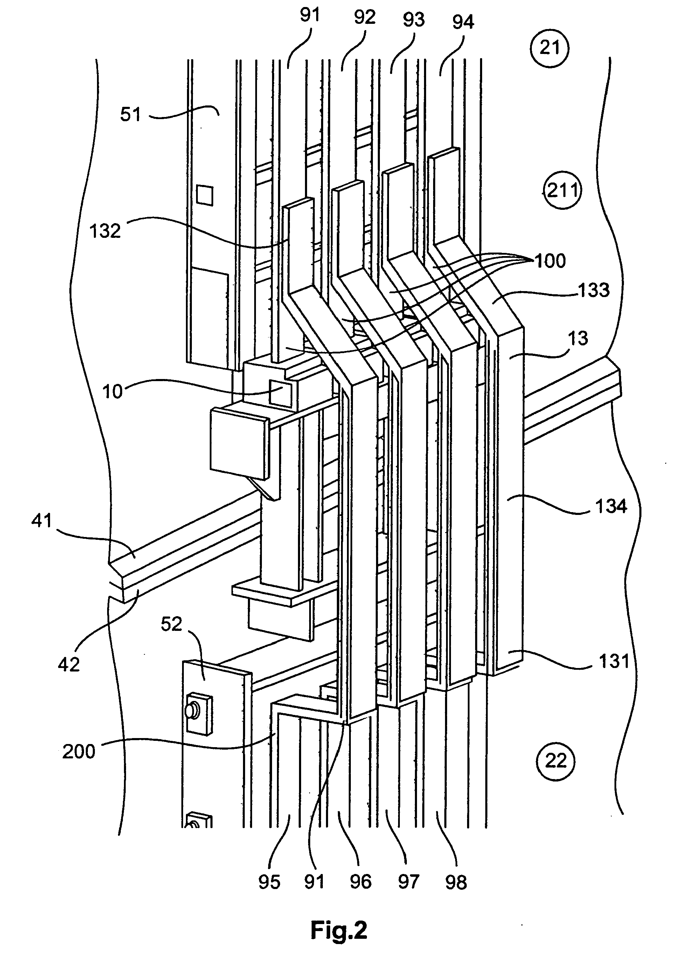

In Fig. 2 ist eine perspektivische Darstellung eines Ausschnittes des Turmes 2 einer erfindungsgemäßen Windenergieanlage 1 gezeigt. Dort sind schematisch zwei Turmsegmente 21, 22 des Turmes 2 gezeigt. Solche Turmsegmente 21, 22 können beispielsweise aus Stahl oder auch aus Beton bestehen. Zu dem Turmsegment 21 werden beispielhaft Stromschienenelemente 91-94 und zu Turmsegment 22 werden Stromschienenelemente 95-98 gezeigt.

Die Turmsegmente 21, 22 sind nur schematisch und in einem Ausschnitt angedeutet. Dabei sind die beiden Turmsegmente 21, 22 durch zwei Flansche 41, 42 miteinander verbunden. Diese Flansche 41, 42 sind ebenfalls nur schematisch dargestellt und insbesondere sind nicht die zur Verbindung üblicherweise verwendeten Schrauben und Muttern dargestellt, da dies nicht Gegenstand der vorliegenden Erfindung ist. Es ist in der Fig. 2 zu erkennen, dass die Stromschienenelemente 91-94 von oben kommend über die Flansche 41, 42 geführt werden und als Stromschienenelemente 95-98 unterhalb der Flansche 41, 42 weiterlaufen. Die Fig. 2 zeigt darüber hinaus Führungselemente 51, 52 im Bereich des oberen bzw. unteren Turmsegmentes 21 bzw. 22. Diese Führungselemente können zum Einen eine Führung für die Stromschienenelemente 91-94 bzw. 95-98 darstellen und schaffen gleichzeitig einen Abstand zum jeweiligen Turmsegment 21 bzw. 22.

Diese Turmsegmente 21, 22 werden vorgefertigt und am Standort der Windenergieanlage 1 zu dem Turm 2 zusammengefügt. Um die Einrichtungszeit zu verkürzen und die Arbeit zu vereinfachen und somit auch die Kosten der gesamten Windenergieanlage zu verringern, werden die Stromschienenelemente 91-94 des Turmsegmentes 21 jeweils mittels eines in dem im aufgebauten Zustand unteren Endbereich 211 des zugehörigen Turmsegmentes 21 angebrachten Klemmhalters 10, in den die Endabschnitte 100 der Stromschienenelemente 91-94 eingeklemmt oder eingesteckt sind, vormontiert. Eine solche Ausgestaltung bietet den Vorteil, dass die Stromschienenelemente mit den jeweilig zugehörigen Turmsegmenten so fest verbunden sind, dass sie beim Transport der vormontierten Turmsegmente zum Aufbauort der Windenergieanlage weder auseinanderfallen, noch sich ineinander verkeilen können.

Dieser Aufbau ermöglicht ebenfalls einen Ausgleich an Relativbewegungen zwischen dem Turm 2 und den Stromschienenelementen 91-94 z. B. infolge unterschiedlicher Ausdehnungskoeffizienten und eine Entkoppelung der Stromschienen von den Turmbewegungen, z.B. durch den Winddruck etc.. Um die Stromschienenelemente 91-94 mit den Stromschienenelementen 95-98 elektrisch zu verbinden und dabei ggf. vorhandene, in den Innenraum vorstehende Teile, wie zum Beispiel am unteren und/oder oberen Endbereich der Turmsegmente 21, 22 vorhandene Flansche 41, 42 zu überbrücken, werden (bevorzugt bewegliche) Verbindungselemente 13 verwendet, welche Materialausdehnungen bzw. Kontraktionen, z. B. durch Temperaturschwankungen oder aufgrund von Turmschwankungen, ausgleichen können.

Die Verbindungselemente 13 können jeweils separate Teile oder aber auch, wie nicht dargestellt, jeweils Teil eines entsprechenden Stromschienenelementes sein.

Die Verbindungselemente 13, insbesondere deren obere Endabschnitte 132, sind bei der gezeigten Ausgestaltung jeweils am im aufgebauten Zustand unteren Endabschnitt 100 der Stromschienenelemente 91-94 des Turmsegmentes 21 mit galvanischer Verbindung dazu fest vormontiert, beispielsweise verschweißt oder verschraubt. Zur Überbrückung der Flansche 41, 42 sind die Verbindungselemente 13 in ihrem Übergangsbereich 133 von der Turminnenwand weg in das Turminnere hinein abgewinkelt, bis sie in einem Mittelbereich 134 wieder parallel zur Turminnenwand verlaufen. Dort sind die Verbindungselemente 13 in der gezeigten Ausführungsform durch Aufgabelung jeweils U-förmig ausgestaltet und weisen zwei in geringem Abstand parallel zueinander verlaufende plattenförmige Abschnitte auf. In deren Endbereich 131 sind die Verbindungselemente 13 dann in montiertem Zustand auf die oberen Endabschnitte 200 der Stromschienenelemente 95-98 des unteren Turmsegmentes 22 aufgesteckt, so dass sich eine mechanische und elektrische Verbindung zwischen den Stromschienenelementen 95-98 und 91-94 über die Verbindungselemente 13 ergibt.

Bevorzugt sind die beiden parallel zueinander verlaufenden plattenförmigen Abschnitte der U-förmigen Mittel- und Endbereiche 134, 131 der Verbindungselemente 13 etwas gegeneinander vorgespannt, so dass sich eine gute Klemmverbindung zwischen den Verbindungselementen 13 und den Endabschnitten 200 der Stromschienenelemente 95-98 ergibt. Eine weitere mechanische Verbindung der Endabschnitte 131 mit den Endbereichen 200, beispielsweise mittels Schrauben oder durch Verschweißen, ist somit nicht zwingend erforderlich. Ein Fortlassen einer solchen mechanischen Verbindung zwischen den Endbereichen 200 der Stromschienenelemente 95-98 und der Endabschnitte 131 der Verbindungselemente 13 erlaubt sogar eine Relativbewegung zueinander, so dass diese hervorrufende Turmbewegungen ausgeglichen werden können.

Die oberen Endabschnitte 200 der Stromschienenelemente sind, wie dies für die Stromschienenelemente 95-98 gezeigt ist, jeweils ebenfalls gewinkelt ausgestaltet, um eine einfache Montage durch Einstecken in die gegabelten Endbereiche der U-förmigen Verbindungselemente 13 zu ermöglichen.

Bei dieser Ausgestaltung sind die Verbindungselemente 13 bereits fest an den unteren Endabschnitten 100 der Stromschienenelemente 91-94 vormontiert, die wiederum bereits in die Klemmelemente 10 eingesteckt bzw. eingeklemmt sind. Es sind jedoch auch andere Ausgestaltungen denkbar. Beispielsweise können die Verbindungselemente 13 bereits von vornherein integraler Bestandteil der Stromschienenelemente 91-94 sein. Ferner können die Verbindungselemente 13 auch andere Formen aufweisen, beispielsweise andere Abwinkelungen oder Rundungen, und könnten jeweils fest an den oberen Endabschnitten 200 der Stromschienenelemente 95-98 fest vormontiert sein, um dann mit entsprechenden Gegenstücken, die an den unteren Endabschnitten der Stromschienenelemente 91-94 angebracht sind, beim Aufbau des Turms verbunden zu werden.

Auch die Ausgestaltung der Verbindung muss nicht, wie in Fig. 2 gezeigt, durch U-förmig ausgebildete, gegabelte Endbereiche erfolgen. Grundsätzlich ist jede Art von Verbindung möglich, wobei bevorzugt einfache Klemm- oder Steckverbindungen eingesetzt werden, die eine möglichst einfache Montage bei gleichzeitig guter mechanischer und elektrischer Verbindung ermöglichen und eine Relativbewegung der in benachbarten Turmsegmenten angebrachten Stromschienenelemente 91-94, 95-98 zueinander erlauben.

Ferner ist gemäß weiteren Ausführungsformen vorgesehen, dass die Verbindungselemente 13 in ihrer Gesamtheit jeweils an den oberen Endabschnitten 200 der Stromschienenelemente jeweils fest vormontiert sind oder integraler Bestandteil der Stromschienenelemente dort sind. Bei einer solchen Ausgestaltung sind die Verbindungselemente 13 bevorzugt zur Turminnenwand hin vorgespannt, so dass die oberen Endbereiche 132 nach dem Zusammenbau der Turmsegmente 21 und 22 gegen die unteren Endabschnitte 100 der Stromschienenelemente 91-94 pressen, so dass dort nicht zwingend zusätzliche Befestigungs- oder Verbindungsmittel, wie etwa Schrauben oder ein Verschweißen, erforderlich sind, um eine gute mechanische und elektrische Verbindung zu erreichen. Alternativ können entsprechend ausgestaltete Verbindungselemente 13 auch an den unteren Endabschnitten 100 der Stromschienenelemente 91-94 angebracht sein, die dann nach dem Zusammenbau der Turmsegmente 21, 22 gegen die oberen Endabschnitte 200 der Stromschienenelemente 95-98 drücken. Diese Ausgestaltung hat zudem den Vorteil, dass die Stromschienensegmente 95-98 dadurch gleichzeitig gegen Umfallen gesichert sind.

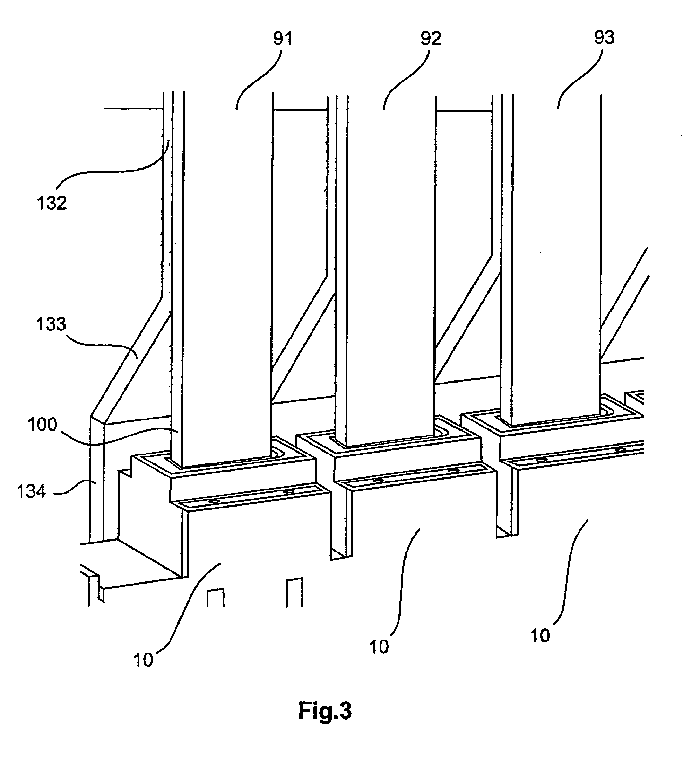

In Fig. 3 ist eine perspektivische Ansicht der Klemmhalter 10, die in dem im aufgebauten Zustand unteren Endbereich des zugehörigen Turmsegmentes 21, 22 angebracht sind, von der Turmwandung aus mit Sicht ins Turminnere, gezeigt. In diesen Klemmhaltem 10 sind die Stromschienenelemente 91-94 mit ihrem Endabschnitt 100 eingeklemmt oder eingesteckt. Ebenfalls ist zu erkennen, dass die oberen Endbereiche 132 der Verbindungselemente 13 an den unteren Endabschnitten 100 der Stromschienenelemente 91-94 anliegen. Die Endbereiche 132 können dabei durch Schrauben oder andere geeignete Verbindungen in den Endabschnitten der Stromschienenelemente 91-94 befestigt sein.

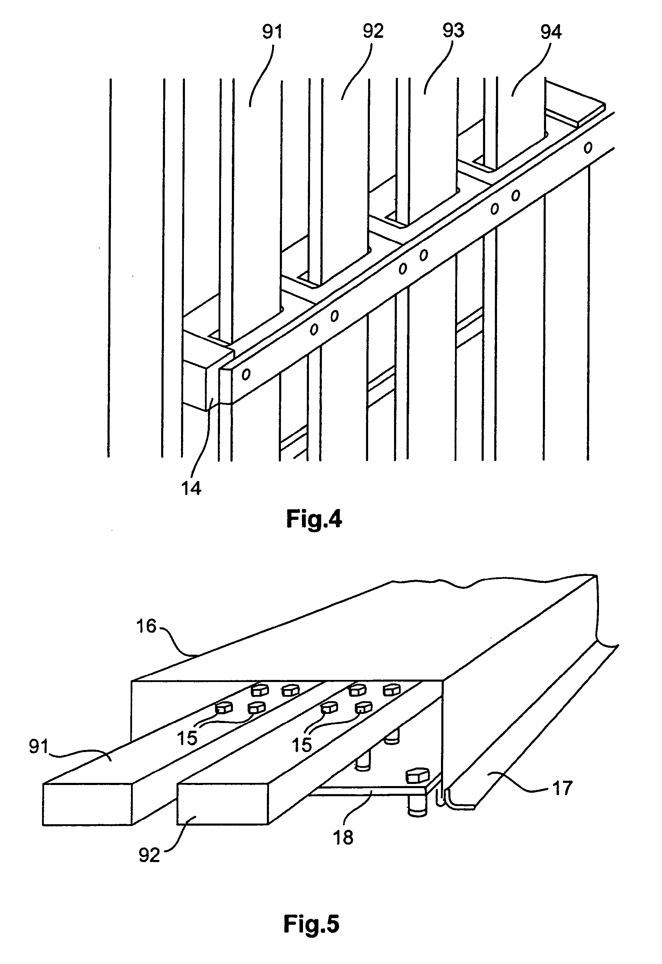

In Fig. 4 ist eine perspektivische Darstellung der Stromschienenelemente 91-94 gezeigt. Hierbei ist zu erkennen, dass die Stromschienenelemente 91-94 in dem im aufgebauten Zustand oberen Endbereich des zugehörigen Turmsegmentes 21 zusätzlich mittels Halteelementen 14 gegen Umfallen gesichert sind. Solche Halteelemente können die Stromschienensegmente 91-94 auch auf ihrer gesamten Länge führen. Dazu kann der Querschnitt der Öffnung für die Stromschienenelemente 91-94 in den Haltern 14 größer bemessen sein als der Querschnitt der Stromschienenelemente 91-94 selbst. Auf diese Weise wird eine Relativbewegung der Stromschienenelemente 91-94 in den Halteelementen 14 ermöglicht und gleichzeitig werden die Stromschienenelemente 91 bis 94 geführt und an ihren vorgegebenen Positionen gehalten.

Es können ebenfalls Isoliermittel vorgesehen sein, um die Stromschienenelemente 91 bis 94 gegenüber den Halteelementen 14 zu isolieren. Alternativ können natürlich auch die Haltevorrichtungen 14 selbst aus einem isolierenden Material hergestellt sein. Die Haltevorrichtung 14 selbst ist fest mit der Innenwand des Turmsegmentes 21 verbunden, vorzugsweise verschraubt.

In Fig. 5 ist eine schematische Ansicht von in einem Turmsegment (in der Fig. nicht dargestellt) vormontierten Stromschienenelementen 91, 92 vormontierten Turmsegmentes gezeigt. Zum Schutz vor Berührungen der Stromschienenelemente 91, 92 beim Betrieb der Windenergieanlage ist ein Schutzblech 16 vorgesehen, das ebenfalls wie die Stromschienenelemente 91, 92 vor Errichtung des Turmes 2 in die einzelnen Turmsegmente bereits eingebaut werden kann. Mittels einer Führungsschiene 17, die beispielsweise aus einem festen Gummi bestehen kann, wird einerseits diese Schutzhülle fixiert und andererseits gegenüber dem Turmsegment isoliert. Zur Befestigung des Schutzbleches 16 können aber auch noch weitere, an sich im Stand der Technik bekannte Mittel, die vorliegend nicht gezeigt sind, vorgesehen sein. Als Halteelemente sind bei dieser Ausgestaltung Schrauben 15 vorgesehen, mit denen die Stromschienenelemente 91, 92 an der Turminnenwand oder einem Abstandsblech 18 angebracht sind.

Weiterhin können in und/oder an diesen als Schutzhüllen vorgesehenen Schutzblechen 16 weitere Einrichtungen wie Steckdosen, Leuchten, etc. angebracht werden, so dass diese ebenfalls auf einfache Weise vormontiert werden können. Außerdem vermeidet insbesondere ein Einbau dieser Einrichtungen in die Schutzhülle 16 eine exponierte Montage an der Turminnenwand und führt damit zu einer verringerten Gefahr einer Beschädigung, z.B. durch herabfallende Gegenstände während und nach der Errichtung des Turmes.

## Patentansprüche

1. Windenergieanlage (1) mit einem aus mehreren Turmsegmenten (21, 22) aufgebauten Turm (2), mit einem im Bereich des Turmkopfes angeordneten Generator (6), mit einem im Bereich des Turmfußes oder entfernt vom Turm (2) angeordneten Leistungsmodul (7), mit segmentiert in den zugehörigen Turmsegmenten (21, 22) vormontierten Stromschienenelementen (91-98) zur Stromübertragung vom Generator (6) zum Leistungsmodul (7) und mit Verbindungselementen (13) zur Verbindung von in benachbarten Turmsegmenten (21, 22) vormontierten Stromschienenelementen (91-98), **dadurch gekennzeichnet, dass** an der Innenwand in dem im aufgebauten Zustand unteren Endbereich (211) der Turmsegmente (21, 22) Klemmhalter (10) angebracht sind und dass die Stromschienenelemente (91-98) dadurch in den jeweils zugehörigen Turmsegmenten (21, 22) vormontiert sind und dass Endabschnitte (200) der Stromschienenelemente (91-98) in die Klemmhalter (10) eingeklemmt oder eingesteckt sind, und dass die Verbindungselemente (13) so vorgespannt sind, dass ein freies Ende an einem Endabschnitt (100, 200) der Stromschienenelemente (91-98) anliegt oder dagegen presst.

2. Windenergleanlage (1) nach Anspruch 1,
**dadurch gekennzeichnet, dass** die Verbindungselemente (13) Teil der Stromschienenelemente (91-98) sind.

3. Windenergieanlage (1) nach Anspruch 1,
**dadurch gekennzeichnet, dass** die Verbindungselemente (13) zu den Stromschieneneiementen (91-98) separate Teile sind.

4. Windenergieanlage (1) nach einem der vorherigen Ansprüche,
**dadurch gekennzeichnet, dass** die Verbindungselemente (13) jeweils am im aufgebauten Zustand unteren Endabschnitt der Stromschienenelemente (91-98) eines zugehörigen Turmsegmentes (21, 22) angeordnet sind.

5. Windenergieanlage (1) nach einem der vorherigen Ansprüche,
**dadurch gekennzeichnet, dass** die Verbindungselemente (13) jewells am im aufgebauten Zustand oberen Endabschnitt (200) der Stromschlenenelemente (91-98) eines zugehörigen Turmsegmentes (21, 22) angeordnet sind,

6. Windenergieanlage (1) nach einem der vorherigen Ansprüche.
**dadurch gekennzeichnet, dass** mindestens ein Endabschnitt (133) der Verbindungselemente (13) jeweils mit einem Endabschnitt (100, 200), insbesondere dem oberen Endabschnitt (200), der stromschienenelemente zusammensteckbar oder -klemmbar ist,

7. Windenergieanlage (1) nach einem der vorherlgen Ansprüche,
**dadurch gekennzeichnet, dass** die Verbindungselemente (13) von der Turminnenwand ins Turminnere zur Überbrückung zweier Flansche (51, 52) zur Verbindung zweier benachbarter Turmsegmente (21, 22) gebogen oder gewinkelt sind.

8. Windenergieanlagen (1) nach einem der vorherigen Ansprüche,
**dadurch gekennzeichnet, dass** die Stromschienenelemente (91-98) Im aufgebauten Zustand oberen Endbereich (211) des zugehörigen Turmsegmentes (21, 22) zusätzlich mittels Halteelementen gegen Umfallen gesichert sind.

9. Turmsegment für eine Windenergieanlage (1) nach einem der vorherigen Ansprüche mit einem aus mehreren Turmsegmenten (21, 22) aufgebauten Turm (2), mit einem im Bereich des Turmkopfes angeordneten Generator (6), mit einem im Bereich des Turmfußes oder entfernt vom Turm (2) angeordneten Lelstungsmodul (7), mit segmentiert in den zugehörigen Turmsegmenten (21, 22) vormontierten Stromschlenenelementen (91-98) zur Stromübertragung vom Generator (6) zum Leistungsmodul (7) und mit Verbindungselementen (13) zur Verbindung von in im aufgebauten Zustand benachbarten Turmsegmenten (21, 22) vormontierten Stromschienenelementen (91-98), **dadurch gekennzeichnet, dass** an der Innenwand in dem im aufgebauten Zustand unteren Endbereich (211) des Turmsegmentes (21, 22) Klemmhalter (10) angebracht sind und dass die Stromschlenenelemente (91-98) dadurch in dem Turmsegment (21, 22) so vormontiert sind und dass Endabschnitte (200) der Stromschienenelements (91-98) in die Klemmhalter (10) eingeklemmt oder eingesteckt sind.

## Claims

1. A wind power installation (1) having a tower (2) assembled from a plurality of tower segments (21, 22), having a generator (6) disposed in the region of the top of the tower, having a power module (7) disposed in the region of the foot of the tower or remote from the tower (2), having busbar elements (91-98) which are pre-installed in segmented form in the associated tower segments (21, 22) for transmitting current from the generator (6) to the power module (7), and having connecting elements (13) for connecting busbar elements (91-98) that are pre-installed in adjacent tower segments (21, 22), **characterised in that** clamping holders (10) are mounted on the inside wall in what is, in the assembled state, the lower end region (211) of the tower segments (21, 22), and the busbar elements (91-98) are thereby pre-installed in the respectively associated tower segments (21, 22), and end portions (200) of the busbar elements (91-98) are clamped or inserted into the clamping holders (10), and the connecting elements (13) are so biased that a free end rests on or presses against an end portion (100, 200) of the busbar elements (91-98).

2. A wind power installation (1) according to claim 1,
**characterised in that** the connecting elements (13) are part of the busbar elements (91-98).

3. A wind power installation (1) according to claim 1,
**characterised in that** the connecting elements (13) are parts that are separate from the busbar elements (91-98).

4. A wind power installation (1) according to any one of the preceding claims,
**characterised in that** the connecting elements (13) are each disposed at what is, in the assembled state, the lower end portion of the busbar elements (91-98) of an associated tower segment (21, 22).

5. A wind power installation (1) according to any one of the preceding claims,
**characterised in that** the connecting elements (13) are each disposed at what is, in the assembled state, the upper end portion (200) of the busbar elements (91-98) of an associated tower segment (21, 22).

6. A wind power installation (1) according to any one of the preceding claims,
**characterised in that** at least one end portion (133) of the connecting elements (13) can be respectively fitted together with or clamped together with an end portion (100, 200), especially the upper end portion (200), of the busbar elements.

7. A wind power installation (1) according to any one of the preceding claims,
**characterised in that** the connecting elements (13) are bent or angled from the inside wall of the tower into the interior of the tower to bridge two flanges (51, 52) for connecting two adjacent tower segments (21, 22).

8. A wind power installation (1) according to any one of the preceding claims,
**characterised in that**, In the assembled state, the busbar elements (91-98) are additionally secured by means of holding elements in the upper end region (211) of the associated tower segment (21, 22) to prevent them from falling over.

9. A tower segment for a wind power installation (1) according to any one of the preceding claims, having a tower (2) assembled from a plurality of tower segments (21, 22), having a generator (6) disposed in the region of the top of the tower, having a power module (7) disposed in the region of the foot of the tower or remote from the tower (2), having busbar elements (91-98) which are pre-installed in segmented form in the associated tower segments (21, 22) for transmitting current from the generator (6) to the power module (7), and having connecting elements (13) for connecting busbar elements (91-98) pre-installed in tower segments (21, 22) that are adjacent in the assembled state, **characterised in that** clamping holders (10) are mounted on the inside wall in what is, in the assembled state, the lower end region (211) of the tower segment (21, 22), and the busbar elements (91-98) are thereby so pre-installed in the tower segment (21, 22), and end portions (200) of the busbar elements (91-98) are clamped or inserted into the clamping holders (10).

## Revendications

1. Eolienne (1) avec une tour (2) constituée de plusieurs segments de tour (21, 22), avec un générateur (6) disposé dans la zone de la tête de tour, avec un module de puissance (7) disposé dans la zone du pied de tour ou à distance de la tour (2), avec des éléments de rails conducteurs (91-98) prémontés de manière segmentée dans les segments de tour afférents (21, 22) pour la transmission de courant du générateur (6) au module de puissance (7) et avec des éléments de liaison (13) pour la liaison d'éléments de rails conducteurs (91-98) prémontés dans des segments de tour (21, 22) contigus, **caractérisée en ce que** des supports de serrage (10) sont montés sur la paroi intérieure dans la zone d'extrémité (211), inférieure à l'état monté, des segments de tour (21, 22) et **en ce que** les éléments de rails conducteurs (91-98) sont prémontés par là-même dans les segments de tour (21, 22) respectivement afférents et **en ce que** des sections d'extrémité (200) des éléments de rails conducteurs (91-98) sont serrées ou enfichées dans les supports de serrage (10),
et les éléments de liaison (13) sont précontraints de sorte qu'une extrémité libre repose, ou soit pressée, contre une section d'extrémité (100, 200) des éléments de rails conducteurs (91-98).

2. Eolienne (1) selon la revendication 1, **caractérisée en ce que** les éléments de liaison (13) font partie des éléments de rails conducteurs (91-98).

3. Eolienne (1) selon la revendication 1, **caractérisée en ce que** les éléments de liaison (13) aux éléments de rails conducteurs (91-98) sont des parties séparées.

4. Eolienne (1) selon l'une quelconque des revendications précédentes, **caractérisée en ce que** les éléments de liaison (13) sont respectivement disposés sur la section d'extrémité, inférieure à l'état monté, des éléments de rails conducteurs (91-98) d'un segment de tour afférent (21, 22).

5. Eolienne (1) selon l'une quelconque des revendications précédentes, **caractérisée en ce que** les éléments de liaison (13) sont respectivement disposés sur la section d'extrémité, supérieure (200) à l'état monté, des éléments de rails conducteurs (91-98) d'un segment de tour afférent (21, 22).

6. Eolienne (1) selon l'une quelconque des revendications précédentes, **caractérisée en ce qu'**au moins une section d'extrémité (133) des éléments de liaison (13) peut être emboîtée ou serrée respectivement avec une section d'extrémité (100, 200) en particulier la section d'extrémité supérieure (200), des éléments de rails conducteurs.

7. Eolienne (1) selon l'une quelconque des revendications précédentes, **caractérisée en ce que** les éléments de liaison (13) sont pliés ou coudés de la paroi intérieure de la tour à l'intérieur de la tour
pour le recouvrement de deux brides (51, 52) destinées à la liaison de deux segments de tour (21, 22) contigus.

8. Eolienne (1) selon l'une quelconque des revendications précédentes, **caractérisée en ce que** les éléments de rails conducteurs (91-98) sont en outre protégés contre le renversement dans la zone d'extrémité (211), supérieure à l'état monté, du segment de tour afférent (21, 22) à l'aide d'éléments de retenue.

9. Segment de tour pour une éolienne (1) selon l'une quelconque des revendications précédentes avec une tour (2) constituée de plusieurs segments de tour (21, 22), avec un générateur (6) disposé dans la zone de la tête de tour, avec un module de puissance (7) disposé dans la zone du pied de tour ou à distance de la tour (2), avec des éléments de rails conducteurs (91-98) prémontés de manière segmentée dans les segments de tour afférents (21, 22) pour la transmission de courant du générateur (6) au module de puissance (7) et avec des éléments de liaison (13) pour la liaison d'éléments de rails conducteurs (91-98) prémontés dans des segments de tour (21, 22) contigus à l'état monté, **caractérisé en ce que** des supports de serrage (10) sont montés sur la paroi intérieure dans la zone d'extrémité (211) inférieure à l'état monté, du segment de tour (21, 22) et **en ce que** les éléments de rails conducteurs (91-98) sont prémontés par là-même dans le segment de tour (21, 22) et **en ce que** des sections d'extrémité (200) des éléments de rails conducteurs (91-98) sont serrées ou enfichées dans les supports de serrage (10).
